# EUROPÄISCHE PATENTSCHRIFT

(11) **EP 2 550 525 B1**
(45) Veröffentlichungstag und Bekanntmachung des Hinweises auf die Patenterteilung: **04.07.2018**
(21) Anmeldenummer: 11712801.7
(22) Anmeldetag: 23.03.2011
(51) Int. Cl.: G01N 27/00, G01N 29/02, G01N 29/036, G01N 29/22

(54) **MESSVORRICHTUNG UMFASSEND EINEN RESONATOR MIT FOLIENTRÄGER**
MEASUREMENT DEVICE COMPRISING A RESONATOR AND A SHEET CARRIER
APPAREIL DE MESURE COMPRENANT UN RESONATEUR ET UN SUPPORT DE BANDE

(30) Priorität: 23.03.2010 DE 102010016102
(43) Veröffentlichungstag der Anmeldung: 30.01.2013
(73) Patentinhaber: Andreas Hettich GmbH & Co. KG, 78532 Tuttlingen (DE)
(72) Erfinder: GEHRING, Frank, K., 72364 Obernheim (DE)
(74) Vertreter: Puschmann Borchert Bardehle Patentanwälte Partnerschaft mbB
(86) Internationale Anmeldenummer: PCT/EP2011/054492
(87) Internationale Veröffentlichungsnummer: WO 2011/117318

(56) Entgegenhaltungen:
- EP-A1- 1 830 169
- WO-A1-2009/153063
- DE-A1- 4 334 834
- DE-A1-102006 015 512

## Beschreibung

Die Erfindung betrifft eine Messvorrichtung umfassend einen Resonator gemäß der im Oberbegriff des Anspruchs 1 angegebenen Art und ein Handstück zur Aufnahme dieser Messvorrichtung gemäß Anspruch 7.

Nach dem nächstliegenden Stand der Technik, den die DE 10 2006 015 512 A1 bildet, ist ein Schwingquarz zur Analyse von Fluiden bekannt. Dafür weist der Schwingquarz einen sensitiven Bereich an der Messoberfläche auf. Zum besseren Handling und zur Abdichtung ist der Schwingquarz an seiner Messoberfläche mit einer Folie verbunden. Die Folie ist mit einer Aussparung versehen, die den Zugang zu einem sensitiven Bereich des Schwingquarzes ermöglicht. Diese Folie ist am oberen Rand mit dem Schwingquarz im Allgemeinen verklebt. Diese Anordnung wird mit der Folie in eine Basisträgereinheit eingesetzt, wobei die Auflagevorrichtung Kontakte zur Kontaktierung des Schwingquarzes bereitstellt. Die Kontaktierung wird erreicht, indem eine Messkammer auf die Folie aufgesetzt wird und den Quarz gegen die Kontakte in der Auflagevorrichtung drückt. Diese Anordnung hat den Nachteil, dass mit der Notwendigkeit Kraft von außen auf den Quarz aufzubringen immer eine Vorrichtung verbunden ist. Diese fixiert die Quarz-Folien-Anordnung dabei mechanisch, wodurch automatisch ein Totvolumen über der Sensoroberfläche gebildet wird.

Nach einem ähnlichen Aufbau funktioniert auch eine Tauchsonde, wie sie in der DE 20 2009 007 108 U1 offenbart ist. Dort wird ein Schwingquarz in einen Sensorkopf derart eingesetzt, dass dieser im Randbereich auf dem Gehäuse aufliegt. Die sensitive Fläche des Schwingquarzes wird über einen O-Ring abgedichtet, der auch den Schwingquarz fixiert. Durch die Verwendung des O-Rings entsteht auch in dieser Ausführungsform eine nach oben geöffnete Messkammer, die wiederum Grund für ein Totvolumen ist. Zudem lässt die Ausgestaltung des Sensorkopfes, aufgrund seiner relativ großen Abmessungen, nur das Eintauchen in relativ große Gefäße zu.

Aus der US 2008/0134767 A1 ist ein Resonator bekannt, der in eine über eine Quarzaufnahme mit einer starren Schaltplatine verbindbar ist. Ein Deckel umgreift die Quarzaufnahme, den Resonator und die Schaltplatine und hält alles mit Kraft- und Formschluss zusammen.

Die DE 43 34 834 A1 offenbart einen Biosensor in Form einer Folienanordnung. Die Folienanordnung umfasst eine abschließende Schicht, die eine Messkammer mit einer kleinen Einfüllüffnung über dem Sensor bereitstellt. Durch diese Ausgestaltung ist eine Einweganwendung für eine Viskositätsmessung eines Fluids geschaffen.

Der Erfindung liegt die Aufgabe zugrunde eine Messvorrichtung gemäß der im Oberbegriff des Anspruches 1 angegebenen Art anzugeben, die nur sehr geringen Bauraum benötigt und einfach herzustellen ist, wobei die Messvorrichtung flexibel einsetzbar sein soll und kein Totvolumen über der sensitiven Sensorfläche aufweisen soll.

Die Aufgabe wird durch die kennzeichnenden Merkmale des Anspruchs 1 in Verbindung mit seinen Oberbegriffsmerkmalen gelöst.

In bekannter Weise umfasst die Messvorrichtung eine Basisträgereinheit, an der Anschlussstellen vorgesehen sind, über die ein Resonator kontaktiert und somit ansteuerbar und auswertbar ist.
In bekannter Weise umfasst so die Messvorrichtung einen Resonator mit einem sensitiven Bereich und eine Basisträgereinheit zur Messung von Eigenschaften eines Fluids, wobei der Resonator in die Basisträgereinheit eingesetzt und in dieser kontaktiert ist, wobei der sensitive Bereich für das Fluid zugänglich bleibt, und der Resonator über Anschlussstellen an der Basisträgereinheit ansprechbar ist. Die Basisträgereinheit wird lediglich durch eine Folienanordnung gebildet, wobei die Basisträgereinheit eine Auflagerfolie umfasst, wobei der Resonator nur in seinem Randbereich auf der Auflagerfolie aufliegt. Ferner ist der Resonator mit einer Abschlussfolie verbunden, mittels welcher der Resonator in der Basisträgereinheit fixiert ist. Die Basisträgereinheit umfasst ferner eine Bodenfolie, die den aufgenommenen Resonator an der Unterseite abschließt, indem sie auf die Auflagerfolie aufgeklebt ist. Ferner liegt zwischen der Auflagerfolie und der Abschlussfolie eine Distanzfolie, die in ihrer Stärke so bemessen ist, dass die mit ihr verklebte Abschlussfolie einen möglichst geringen Druck auf den Resonator ausübt, so dass dieser weitgehend ungedämpft schwingen kann.

Erfindungsgemäß ist vorgesehen, dass der Resonator über Leiterbahnen, die auf der Auflagerfolie aufgebracht sind kontaktiert ist, indem dieser an die Leiterbahnen angedrückt wird, und ferner die Abschlussfolie eine Ausnehmung über die gesamte Stärke der Abschlussfolie aufweist, deren Durchmesser geringfügig kleiner ist als der Durchmesser des Resonators, so dass die Abschlussfolie nur im Randbereich des Resonators aufliegt.

Die Folienanordnung hat den Vorteil, dass die Bearbeitung und Zusammensetzung der einzelnen Komponenten insbesondere der Folien sehr einfach und daher entsprechend günstig ist. Einzelne Folien können auf einfache Weise bereitgestellt werden, da sich ihre Bearbeitung lediglich auf ein Ausschneiden, bzw. Ausnehmen einzelner Folienbereiche und ein Verbinden der einzelnen Folien erstreckt. Dadurch kann eine genaue Detektionseinrichtung als Wegwerfartikel bereitgestellt werden.

So ist nach dem erfindungsgemäßen Gedanken, der Resonator an der Oberfläche, welche auch den sensitiven Bereich aufweist, mit einer Abschlussfolie verbunden. Der Resonator wird mittels Abschlussfolie in der Basisträgereinheit fixiert und derart verspannt, dass eine elektrische Kontaktierung gewährleistet ist. Die Befestigung der Abschlussfolie am Resonator ist fluidisch dicht, und weist eine Aussparung auf, die den Zugang zum sensitiven Bereich des Resonators ermöglicht. Durch die Verspannung bzw. Fixierung des Resonators mittels der Abschlussfolie wird dieser kontaktiert gehalten und erlaubt es, aufgrund des geringen Materialauftrags durch die Abschlussfolie am sensitiven Bereich totvolumenfrei zu messen. Ferner wird der Resonator nur minimal vorgespannt, was die Messergebnisse deutlich verbessert.

Indem die Trägereinheit eine Bodenfolie umfasst, wird die Trägereinheit nach unten begrenzt und der Schwingquarz nach unten abdichtet.

Insbesondere können auf der Bodenfolie Leiterbahnen angeordnet sein, welche in Resonatorkontaktpads enden. Auf diese Leiterbahnen, die vorzugsweise in ihrer Stärke so bemessen sind, dass die Kontaktpads den aufgesetzten Resonator von der Bodenfolie beabstandet halten, wird der Resonator zur Kontaktierung aufgesetzt.

Erfindungsgemäß ist also auf der Bodenfolie noch eine Auflagerfolie angeordnet. Diese Auflagerfolie ist derart ausgestaltet, dass der Resonator der auf die Auflagerfolie aufgesetzt ist, nur im Randbereich auf dieser aufliegt. Durch die Auflagerfolie, kann der Resonator in einem bestimmten Abstand zur Bodenfolie gehalten werden. Insbesondere sind die Resonatorkontaktpads an der Auflagerfolie angeordnet. Entsprechend sind auch die Leiterbahnen auf der Auflagerfolie aufgebracht.

Erfindungsgemäß ist also über der Auflagerfolie eine Distanzfolie angeordnet sein, wobei die Distanzfolie eine Aussparung für den Resonator aufweist, die das Einsetzen des Resonators auf die Auflagerfolie oder auch Bodenfolie ermöglicht. Der Durchmesser der Aussparung kann vorzugsweise so gewählt werden, dass diese etwas größer als der Durchmeser des einzusetzenden Resonators ist, damit dieser in lateraler Richtung frei schwingen kann. Diese Ausgestaltung hat den Vorteil, dass ein Kurzschluss vermieden wird, da durch die Aussparung nur eine Elektrode des Resonators zugänglich ist.

Durch die Distanzfolie, kann die Stärke des Resonators ausgeglichen werden. Dadurch kann die Basisträgereinheit so ausgestaltet werden, dass diese an ihrer Oberseite nahezu bündig mit der Resonatoroberfläche ist. Dies hat zur Folge, dass der Resonator mit einer geringen Vorspannung bzw. Verspannung gehalten werden kann. Insbesondere ist die Distanzfolie in ihrer Dicke derart ausgelegt, dass ihre Oberseite im Relation zur Resonatoroberfläche etwa 50 µm beabstandet ist. Die Dicke der Distanzfolie kann zu d = (c/f) / 2 - x berechnet werden, wobei c die Schallgeschwindigkeit, f die Resonanzfrequenz des Resonators und x der Höhenunterschied in Abhängigkeit der gewünschten Vorspannung ist. Ergibt sich eine Dicke d <= 0 so ist keine Distanzfolie notwendig.

Der Begriff Folie im Sinne der Erfindung bedeutet nicht ausschließlich polymere Folien, sondern bezieht sich lediglich auf Lagen mit geringen Schichtdicken vorzugsweise im Mikrometerbereich.

Der Resonator, ist zur Analyse eines Fluids mit diesem in Kontakt bringbar und spricht auf eine Massenanlagerung der nachzuweisenden Stoffes, der Substanz, Partikel und/oder Mikroorganismen durch Änderung der Resonanzfrequenz und/oder Dämpfung an. Diese kann über eine zugeordnete Messeinheit ausgewertet werden.

Der Resonator kann auf seiner Messoberfläche mit dem sensitiven Bereich eine erste Elektrode aufweisen, welche die ganze Resonatoroberfläche bedeckt. Diese Elektrode ist über den Resonatorrand auf die unter Quarzseite geführt, und weist dort ein Kontaktierungspad zur Kontaktierung mit einer der beiden Leiterbahnen auf. Zudem ist die untere Quarzseite mit einer weiteren Elektrode versehen, die nicht die komplette Oberfläche der unteren Seite abdeckt, und somit elektrisch von der ersten Elektrode getrennt ist und mit der anderen der Leiterbahn verbunden ist.

Zur Abdichtung des Schwingquarzes kann eine Klebstoffschicht zwischen Messoberfläche des Resonators und der Basisträgereinheit eingesetzt werden. Zudem fixiert diese den Schwingquarz auf den Kontaktpads.

Alternativ zu einer Klebestoffverbindung kann eine Abschlussfolie verwendet werden, die auf der Oberseite des Schwingquarzes derart aufgebracht ist, dass der sensitive Bereich des Schwingquarzes nach wie vor zugänglich ist und sich zumindest bereichsweise über die Basisträgereinheit erstreckt und mit dieser verbunden ist.

Insbesondere ist der Resonator nicht mit der Basisträgereinheit oder der Abschlußfolie verklebt sondern wird nur durch die von der Abschlussfolie aufgebrachten Spannung gehalten. Dies hat den Vorteil, dass die Herstellung deutlich vereinfacht wird, da kein Klebstoff auf den Resonator selbst aufgebracht werden muss, was immer die Gefahr einer Kontamination der Resonatoroberfläche birgt. Ferner wirkt sich eine durch die Vorspannung gehaltene Lagerung vorteilhaft auf das Schwingverhalten des Resonators aus, da dieser in lateraler Richtung frei schwingen kann.

Vorzugsweise kann die Abschlussfolie über eine thermische Klebeverbindung an der Basisträgereinheit befestigt werden. Dies erleichtert die Herstellung, da kein separater Klebstoff aufgebracht werden muß.

Indem der Resonator nicht direkt mit der Basisträgereinheit verklebt wird, sondern durch die Vorspannung der darüberliegenden Abschlußfolie gehalten wird, ist der Resonator in einem gewissen Maß mechanisch entkoppelt. Ein Verbiegen der Trägerstruktur beispielsweise in ihrem Anschlußbereich führt nur zu einer vernachlässigbaren Beeinträchtigung des Resonators bezüglich seiner Schwingungseigenschaften.

Da die Abschlussfolie insbesondere eine sehr geringe Stärke im Vergleich zum Durchmesser des Resonators aufweist, entsteht an der Oberfläche entgegen dem Stand der Technik kein Meßraum, der ein Totvolumen zur Folge hat. Dies verhindert ebenfalls die Bildung von Luftblasen über der Sensoroberfläche, die eine Adsorptionsmessung verhindern würde.

Die Abschlussfolie weist einen Durchmesser der Ausnehmung auf, der geringfügig kleiner ist als der Resonatordurchmesser. Dadurch liegt die Folie nur im Randbereich auf, wo die geringsten Schwingungsamplituden vorherrschen, und entsprechend die Dämpfung des Resonators durch die Abschlussfolie minimal wird.

Die Folienlagen können untereinander mittels Klebstoffen verbunden sein. Vorzugsweise kann die Klebeverbindung als thermische Klebeverbindung ausgestaltet sein. Dadurch können die einzelnen Komponenten der Anordnung genau ausgerichtet und durch Einbringen von thermischer Energie miteinander verklebt werden.

Insbesondere ist die Auflagerfolie als Keramikfolie ausgebildet. Dies gewährleistet zum einen ein gewisses Maß an Stabilität, zum anderen ermöglicht es die weiterführende Behandlung mittels Bedampfen. Zudem sind Leiterbahnen vorgesehen, die den Kontakt zum Resonator herstellen, indem dieser an die Leiterbahn angedrückt wird. Die Leiterbahnen können vorzugsweise auf die Auflagerfolie aufgebracht werden. Indem die Leiterbahnen den Resonator von der Folie beabstanden, werden Spannungen vermieden und eine problemlose Kontaktierung des Resonators ermöglicht. Vorzugsweise sind die Kontaktstellen auf der Folie aus Gold ausgebildet.

In einer besonders vorteilhaften Ausführungsform sind alle Folien aus Polyimid (PI) ausgebildet. Eine grundsätzlich flexible Ausgestaltung der Anordnung durch die Verwendung von Folie mit geringer Steifigkeit, hat den Vorteil, dass die Folienanordnung nicht bruchanfällig ist.

Ferner kann die Folienanordnung im Bereich des Resonators durch eine dickere Folie versteift werden. Dies erhöht die Güte des erzielten Messergebnisses, da dadurch die eingebrachten Spannungen deutlich reduziert werden.

Die Ausgestaltung der Basisträgereinheit als Folienanordnung, hat den Vorteil, dass nach einer Messung die gesamte Trägereinheit entsorgt werden kann. Dies ist besonders vorteilhaft, um eine Kontaminationen des Resonators für nachfolgende Messungen auszuschließen. Diese einfache Austauschbarkeit wird dadurch möglich, dass durch die erfindungsgemäße Ausgestaltung eine kostengünstige Umsetzung einer Messvorrichtung mit einem Resonator realisiert ist.

Die Basisträgereinheit, weist an einer Oberfläche die notwendigen Anschlussstellen auf. Die Anschlussstellen sind in Form von Platinen-Kontaktpads ausgebildet. Diese können vorzugsweise auf der Auflagerfolie aufgebracht sein. Für den Fall, dass über der Auflagerfolie noch eine Trägerfolie oder sogar eine Abschlussfolie aufgebracht sind, weisen diese Folien in dem Bereich der Platinen-Kontaktpads Ausnehmungen auf, die den Zugang zu den Platinen-Kontaktpads ermöglichen. Die Platinen-Kontaktpads können vorzugsweise flächig und dünn gegenüber den eingebrachten Leiterbahnen ausgebildet sein.

Über die Platinen-Kontaktpads, kann der Schwingquarz leicht mit Klemm- oder Federkontakten gut zugänglich kontaktiert werden. Dies ermöglicht vielfältige Einsatzmöglichkeit. Beispielsweise kann die Messvorrichtung einfach mit einem Spitzenprober kontaktiert werden und das zu analysierende Probenfluid mit einer Pipette auf den Resonator aufgebracht werden. Dies ermöglicht einen Einsatz in Verbindung mit einer gängigen Laborausstattung, was die Anordnung besonders für einmalige Versuche interessant macht.

Die Folien können je eine Stärke von 25µm bis 100µm, insbesondere 50 µm, aufweisen, die mit Klebeschichten von etwa 18 µm Stärke verbunden werden. Dies hat eine äußerst geringe Gesamtstärke der Messvorrichtung zur Folge. Aufgrund dieser sehr dünnen Ausgestaltung der, den Schwingquarz einfassenden Trägereinheit ist ein vielfältiger Einsatz der Messvorrichtung selbst in kleinsten Gefäßen mit kleinsten Probenvolumen möglich.

Neben der Analyse der Schwingungsparameter des Resonators kann die Messvorrichtung auch als Arbeitselektrode für eine elektrochemische Messung dienen.

In einer besonders vorteilhaften Form, ist die Trägereinheit entlang des Schwingquarzumfangs halbkreisförmig abgerundet. Dies ermöglicht es den Schwingquarz in Verwendung einer Tauchsonde möglichst nah an den Gefäßboden zu bringen, um die notwendige Messvolumenmenge möglichst gering zu halten. Dies bietet vor allem bei teuren Fluidproben ein enormes Kostenersparnispotential.

Gemäß einer weiteren Ausführungsform ist ein Handstück vorgesehen, in welches die platinenartige Messvorrichtung eingesetzt werden kann. Das Handstück weist entsprechend am ersten Ende eine Aufnahme- und Kontaktiervorrichtung für eine platinenartige Messvorrichtung, oder Trägereinheit auf.

In einer Ausbildung ist die Messvorrichtung in der Aufnahmevorrichtung fixiert und ragt aus dem Handstück heraus. Dadurch wird eine minimalste Abmessung garantiert, was den Einsatz auch für geringe Mengen Flüssigkeitsproben ermöglicht. In dieser Konfiguration kann der Schwingquarz als Tauchsonde zum Nachweis bzw. der Messung der Konzentration von Stoffen, Substanzen und/oder Mikroorganismen in Flüssigkeiten eingesetzt werden.

Die Aufnahmevorrichtung kann mit einer seitlichen Führung versehen sein, wodurch die Trägereinheit seitlich geführt wird. Die Kontaktierung erfolgt über eine Federklemme. Insbesondere ist die Federklemme zweiteilig ausgeführt, wobei die beiden Klemmkontakte über einen Isolator verbunden sind, dadurch werden die beiden Enden stabil zueinander gehalten und können gleichzeitig bewegt werden, um das Einlegen der Messvorrichtung zu gewährleisten. Diese Ausführungsform hat den Vorteil, dass über die gleiche Klemme sowohl eine mechanische Fixierung als auch die elektrische Kontaktierung der Platinen-Kontaktpads erfolgen kann. Insbesondere ist die Klammer, die in das Gehäuses eingeführt ist gegen Feuchtigkeit abgedichtet, was beispielsweise durch Vergießen des Gehäuses mit Silikon erreicht werden kann. Ferner sind die Enden der Klammer an eine Anschlussplatine innerhalb des Gehäuses geführt und mit dieser verlötet.

In einer weiteren Ausgestaltung ist das Handstück zweiteilig ausgebildet. In einer ersten Komponente können die Kabel oder weitere Elektronik aufgenommen sein. Die zweite Komponente weist an Ihrem freien Ende eine Aufnahmevorrichtung für die Messvorrichtung auf und am anderen Ende eine Kontaktierungs- und Anschlussplatine zur Verbindung mit der ersten Komponente des Handteils auf. Die Kopplung der zweiten Komponente an die erste Komponente des Handstücks erfolgt derart, dass der Innenraum der ersten Komponente vor Feuchtigkeit geschützt ist. Entsprechend können die beiden Komponenten über einen Dichtring gegeneinander abgedichtet sein. Vorzugsweise sind die Komponenten des Handstücks in ihrem Übergang überlappend ausgebildet. Dies hat zur Folge, dass beispielsweise die Anschlussplatine, die in der zweiten Komponente angeordnet ist auch innerhalb der ersten Komponente liegt.

Das Handstück kann darüber hinaus einen Anschluss aufweisen, der den Anschluss an eine Spannungsversorgung bzw. an Auswertgeräte ermöglicht. Insbesondere ist dieser Anschluss als BNC-Anschluss ausgebildet.

Im Folgenden wird die Erfindung anhand einer Zeichnung näher erläutert. Hierbei gehen aus der Zeichnung und ihrer Beschreibung weitere erfindungswesentliche Merkmale und Vorteile der Erfindung hervor. In der Zeichnung werden die in der Bezugszeichenliste aufgeführten Bezugszeichen verwendet.

In der Zeichnung bedeutet:
- Fig. 1: Querschnitt durch eine Resonatorplatine;
- Fig. 2: Draufsicht auf eine Resonatorplatine;
- Fig. 3: Basisträgereinheit einer Trägereinheit, die aus drei Folien gebildet ist;
- Fig. 4: die Basisträgereinheit mit Schwingquarz und Abschlussfolie;
- Fig. 5: Handstück mit eingesetzter Resonatorplatine, und
- Fig. 6: eine Detailaufnahme einer ersten Komponente des Handstücks.

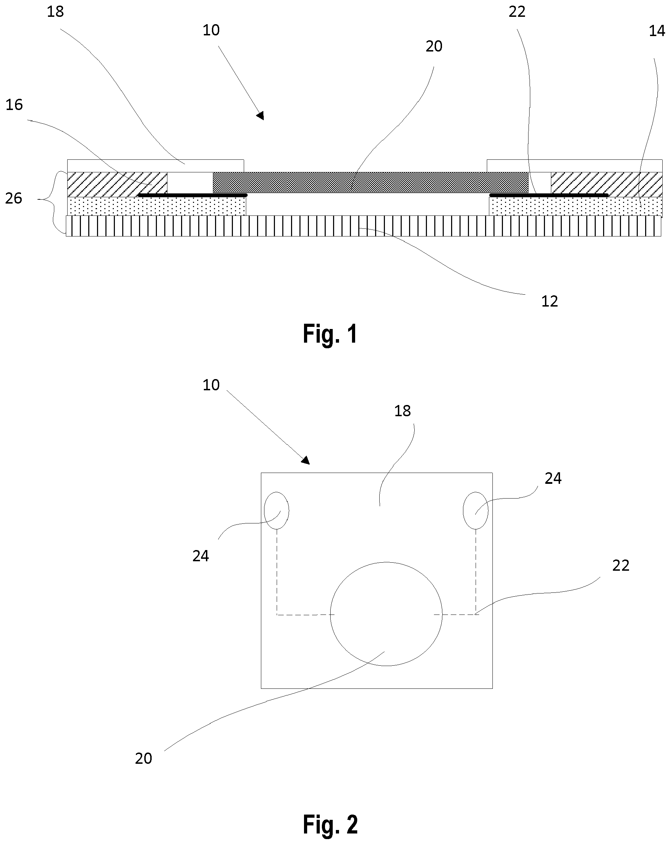

Fig. 1 zeigt einen Querschnitt durch eine Resonatorplatine 10. Die Resonatorplatine10 umfasst eine Basisträgereinheit, welche aus einer Bodenfolie 12, einer Auflagerfolie 14 und einer Distanzfolie 16 besteht. Zudem ist eine Abschlussfolie 18 vorgesehen, die den Schwingquarz 20 in der Basisträgereinheit fixiert. Zudem weist die Auflagerfolie 14 Leiterbahnen 22 auf. Diese Leiterbahnen enden am Rand des Schwingquarzes in Resonatorkontakten 22.

Zur Bildung der Basisträgereinheit 26 ist auf die Bodenfolie 12 eine Auflagerfolie 14 aufgeklebt. Die Auflagerfolie 14 ist in ihrer Oberseite mit Resonatorkontakten 22 versehen. Der Resonator 20, der ebenfalls an seiner Unterseite Kontakte für seine Elektroden aufweist, liegt mit diesen auf den Resonatorkontakten 22 auf. Um den Resonator 20 an seiner Position zu fixieren, ist dieser an seiner Oberseite, welche auch das sensitive Element des Resonators aufweist mit einer Abschlussfolie 18, die lediglich im Randbereich des Resonators 20 anliegt, verklebt. Die Distanzfolie 16 ist in ihrer Stärke so bemessen, dass die mit ihr verklebte Abschlussfolie 18 einen möglichst geringen Druck auf den Resonator 20 ausübt. Dennoch ist der ausgeübte Druck ausreichend groß, um die Kontaktflächen des Resonators 20 mit den Resonatorkontakten 22 dauerhaft und zuverlässig elektrisch zu verbinden. Durch diese Anordnung ist auf einfache Weise eine Resonatorplatine geschaffen, die aufgrund ihrer Abmessungen sowie der zur Verfügung gestellten Kontaktstellen flexibel und schnell einsetzbar ist. Zudem kann diese aufgrund ihrer kostengünstigen Ausgestaltung auch als Wegwerfartikel eingesetzt werden. Dies ist besonders für Messungen sinnvoll, bei welchen eine Verunreinigung ausgeschlossen werden muss.

Fig. 2 zeigt eine schematische Draufsicht auf eine Resonatorplatine 10 gemäß Fig. 1. Die Resonatorplatine 10 weist eine im Wesentlichen quadratische Grundform auf, welche nach oben durch die Abschlussfolie 18 begrenzt ist. Ferner ist der sensitive Bereich des Resonators 20 dargestellt. Die auf der Auflagerfolie aufgebrachten Quarzkontaktstellen 22, sowie die Leiterbahnen 26 sind lediglich angedeutet. Die Leiterbahnen 26 verbinden die Quarzkontakte 22 mit den Anschlusskontakten 24. Die Anschlusskontakte 24 sind aufgrund von Ausnehmungen in der Abschlussfolie 18 von außen zugänglich. Somit kann der Resonator 20 über die leicht zugänglichen Anschlusskontakte 24 auf einfache Weise auch mit herkömmlichen Mess- und Steuergeräten kontaktiert und in Betrieb genommen werden, ohne dass es aufwändiger Kammerkonstruktionen bedarf.

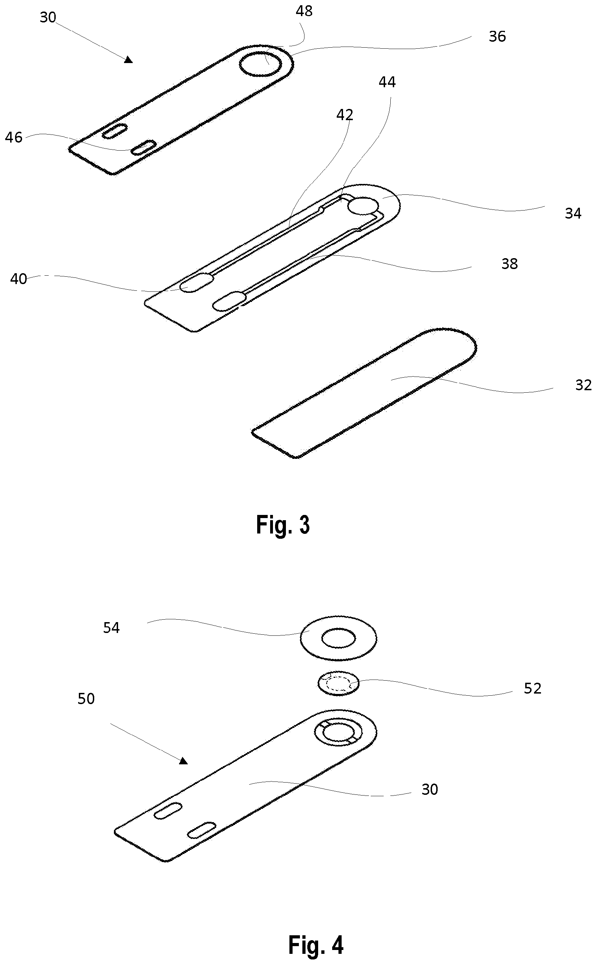

Fig. 3 zeigt die Basisträgereinheit 30, welche aus drei Folien, einer Bodenfolie 32, einer Auflagerfolie 34 und einer Distanzfolie 36 besteht. Das Kernstück der Basisträgereinheit 30 bildet die Auflagerfolie 34. Diese weist Quarzkontaktstellen 44 auf, die über eine Leiterbahn 42 mit den Anschlusskontakten 40 verbunden sind. Anschlusskontakt- und Quarzkontaktstelle 44 sind chemisch vergoldet und weisen eine Stärke von etwa 1 bis 2 Mikrometer auf. Die beiden Kontaktstellen sind mit einer Kupferleiterbahn verbunden, die etwa 35 Mikrometer stark ist. Um die Basisträgereinheit 30 zu bilden, werden die Bodenfolie 32, die Auflagerfolie 34 und die Distanzfolie 36 mit einem silikonhaltigen Acrylkleber verklebt. Die Kleberschicht trägt dabei etwa 25 Mikrometer auf.

Fig. 4 zeigt eine Resonatorplatine 50 umfassend die Basisträgereinheit 30 und eine Abschlussfolie 54. Zur Herstellung der Messvorrichtung wird der Resonator 52 in die vorgesehene Ausnehmung der Basisträgereinheit 30 eingebracht und über die Abschlussfolie 54 verklebt. Die Abschlussfolie 54 liegt lediglich im Randbereich am Resonator 52 auf. Die Abschlussfolie 54 dichtet die sensitive Resonatorfläche gegenüber dem übrigen Resonator 52 ab. Dadurch ist auch die umfängliche Distanz des Resonators 52 zur Distanzfolie gewahrt und der Resonator kann frei schwingen. Durch die Basisträgereinheit 30 und die Abschlussfolie 54 ist die Trägereinheit 50 in ihrem vorderen Bereich vollständig gegen das Eindringen von Flüssigkeit abgedichtet. Diese Anordnung eignet sich daher besonders zur Verwendung als Tauchsonde.

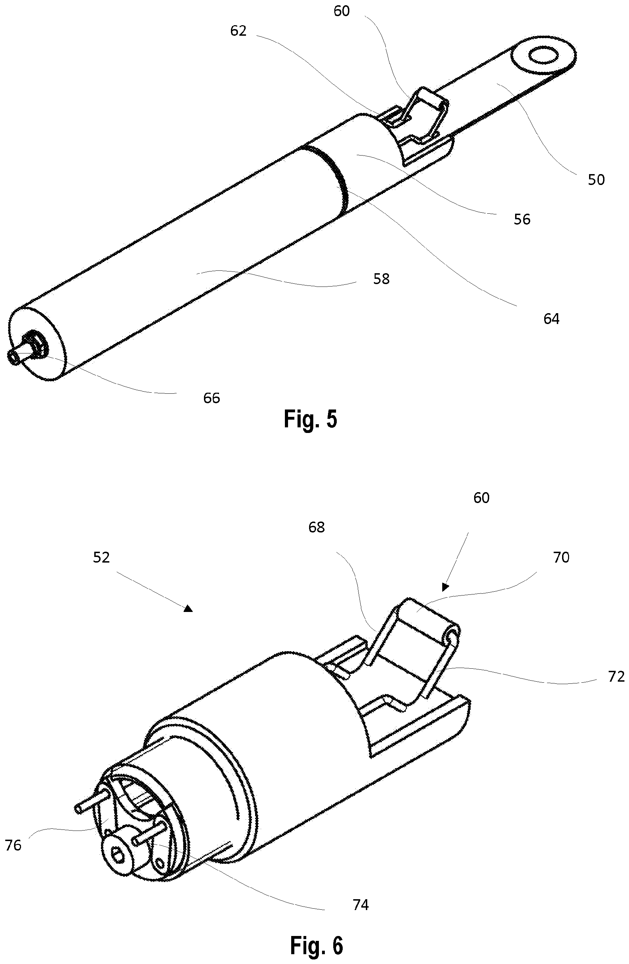

Fig. 5 zeigt die Resonatorplatine 50, welche in einem zweiteiligen Handstück aufgenommen ist, wobei das Handstück eine erste Handstückkomponente 56 und eine zweite Handstückkomponente 58 umfasst. Zur Aufnahme der Trägereinheit 50 ist im vorderen Ende eine Kontaktklammer 60 vorgesehen, welche in die Kontaktstellen 62 eingreift, über diese den Kontakt zum Handstück herstellt und gleichzeitig über die Federwirkung die Trägereinheit 50 fixiert. Die erste Handstückkomponente 56 und die zweite Handstückkomponente 58 sind über einen Dichtungsring 64 miteinander verbunden. Dies verhindert das Eindringen von Flüssigkeit oder Feuchtigkeit in die zweite Handstückkomponente. Am entfernten Ende der zweiten Handstückkomponente ist ein BNC-Anschluss 66 angeordnet, über den die Verbindung zur Spannungsversorgung und Messeinrichtung hergestellt werden kann.

Diese Anordnung eignet sich besonders zur Verwendung als Tauchsonde, weil durch die bewegliche Lagerung im Handstück die Messvorrichtung beliebig positioniert werden kann, insbesondere auch in ein mit einem Probenfluid gefülltes Gefäß eingetaucht werden kann. Die Komponenten des Handstücks sind aus PEEK ausgebildet, da PEEK besonders resistent gegen chemikalische Einflüsse, Temperatur und ein elektrischer Isolator ist. Zudem kann das Handstück insbesondere die zweite Handstückkomponente als Träger für zusätzliche elektrische Signalverarbeitung oder sonstiger Schaltungen dienen. Dies erweitert den Einsatzbereich der erfindungsgemäßen Messvorrichtung ungemein.

Fig. 6 zeigt eine Detailzeichnung der zweiten Handstückkomponente 52. Besonders hervorzuheben ist hier die Kontaktklammer 60, welche aus einem ersten Kontakt 68 und einem zweiten Kontakt 72 besteht, die über eine Isolatorhalterung 70 verbunden sind. Die Kontakte 68, 72 sind mit ihren entfernten Ende in der ersten Handstückkomponente aufgenommen. Zudem sind sie am aufnehmenden Ende so geformt, dass die Kontakte 68, 72 eine Federkraft auf die Auflagefläche der zweiten Handstückkomponente ausüben. Zudem weist die Aufnahmevorrichtung eine seitliche Führung zur Justierung der Messvorrichtung der Resonatorplatine auf. Die Enden der Kontakte 68, 72 sind in einer Kontaktplatine 76 aufgenommen. Diese vergrößert den leitenden Kontakt um eine sichere Kontaktierung zwischen der ersten und der zweiten Handstückkomponente zu gewährleisten. Der die beiden Kontakte 68, 72 verbindende Isolator 70 hat zudem den Vorteil, dass er nicht nur die beiden Kontakte elektrisch trennt und mechanisch verbindet, sondern dient aufgrund der Formgebung der Kontakte auch als Bedienelement für den Anschluss einer Resonatorplatine. Der Isolator 70 ist leicht zugänglich, kann daher gut erreicht und angehoben werden.

## Patentansprüche

1. Messvorrichtung (10, 50), umfassend einen Resonator (20, 52) mit einem sensitiven Bereich und eine Basisträgereinheit (26, 30), zur Messung von Eigenschaften eines Fluids, wobei der Resonator (20, 52) in die Basisträgereinheit (26, 30) eingesetzt und in dieser kontaktiert ist, wobei der sensitive Bereich für das Fluid zugänglich bleibt, und der Resonator (20, 52) über Anschlussstellen (24, 40) an der Basisträgereinheit (26, 30) ansprechbar ist, wobei die Basisträgereinheit (26, 30) lediglich durch eine Folienanordnung gebildet wird, wobei die Basisträgereinheit (26, 30) eine Auflagerfolie (14, 34) umfasst, wobei der Resonator (20, 52) nur in seinem Randbereich auf der Auflagerfolie (14, 34) aufliegt, wobei der Resonator (20, 52) mit einer Abschlussfolie (18, 54) verbunden ist, mittels welcher der Resonator (20, 52) in der Basisträgereinheit (30) fixiert ist, wobei die Basisträgereinheit eine Bodenfolie (12) umfasst, die den aufgenommenen Resonator (30) an der Unterseite abschließt, indem sie auf die Auflagerfolie (14,34) aufgeklebt ist, und dass zwischen Auflagerfolie (14,34) und Abschlussfolie (18,54) eine Distanzfolie (16) liegt, die in ihrer Stärke so bemessen ist, dass die mit ihr verklebte Abschlussfolie (18,54) einen möglichst geringen Druck auf den Resonator (30) ausübt, so dass dieser weitgehend ungedämpft schwingen kann. **dadurch gekennzeichnet, dass** der Resonator (20, 52) über Leiterbahnen (27, 42), die auf der Auflagerfolie (14, 34) aufgebracht sind kontaktiert ist, indem dieser an die Leiterbahnen (27, 42) angedrückt wird, und ferner die Abschlussfolie (18, 54) eine Ausnehmung über die gesamte Stärke der Abschlussfolie (18, 54) aufweist, deren Durchmesser geringfügig kleiner ist als der Durchmesser des Resonators (20, 52), so dass die Abschlussfolie (18, 54) nur im Randbereich des Resonators (20, 52) aufliegt.

2. Messvorrichtung nach einem der vorangehenden Ansprüche, **dadurch gekennzeichnet, dass** eine Distanzfolie (16, 36) vorgesehen ist, die eine Ausnehmung aufweist, in welche der Resonator (20, 52) einsetzbar ist, und deren Stärke der Stärke des Resonators (20, 52) entspricht.

3. Messvorrichtung nach einem der vorangehenden Ansprüche, **dadurch gekennzeichnet, dass** der Resonator (20, 52) über Leiterbahnen (27, 42), die auf der Auflagerfolie (14, 34) aufgebracht sind kontaktiert ist, und die Leiterbahnen (27, 42) zwischen Auflagerfolie (14, 34) und Distanzfolie (16, 36) verlaufen.

## Claims

1. Measurement device (10, 50), comprising a resonator (20, 52) with a sensitive region, and a basic carrier unit (26, 30), for measuring properties of a fluid, which resonator (20, 52) is inserted into the basic carrier unit (26, 30) and contacted therein, with the sensitive region remaining accessible for the fluid, and which resonator (20, 52) can be addressed via connection points (24, 40) on the basic carrier unit (26, 30), which basic carrier unit (26, 30) is merely constituted by a film arrangement, wherein said basic carrier unit (26, 30) comprises a support film (14, 34), with only the periphery of said resonator (20, 52) resting on said support film (14, 34), said resonator (20, 52) being connected to a terminating film (18, 54) which is used to fix the resonator (20, 52) in position in the basic carrier unit (30), said basic carrier unit comprising a bottom film (12) which closes the bottom of the resonator (30) received in the unit by being glued to the support film (14, 34), and that a spacer film (16) is provided between the support film (14, 34) and the terminating film (18, 54), with the thickness of said spacer film (16) having been selected such that the terminating film (18, 54) bonded to it will exert as little pressure as possible on the resonator (30) in order to enable the latter to resonate almost without attenuation, **characterized in that** said resonator (20, 52) is contacted via strip conductors (27, 42) provided on the support film (14, 34), which contacting is achieved by pressing the resonator onto the strip conductors (27, 42), and furthermore the terminating film (18, 54) has a recess that extends through the entire thickness of the terminating film (18, 54) and that is of a diameter which is slightly smaller than the diameter of the resonator (20, 52), with the result that the terminating film (18, 54) only rests on the periphery of the resonator (20, 52).

2. Measuring device according to one of the preceding claims, **characterized in that** a spacer film (16, 36) is provided that has a recess into which the resonator (20, 52) can be inserted, which recess is of a thickness that corresponds to the thickness of the resonator (20, 52).

3. Measuring device according to one of the preceding claims, **characterized in that** the resonator (20, 52) is contacted via strip conductors (27, 42) that are provided on the support film (14, 34), which strip conductors (27, 42) extend between the support film (14, 34) and the spacer film (16, 36).

## Revendications

1. Dispositif de mesure (10, 50) comprenant un résonateur (20, 52) présentant une zone sensible et une unité de support de base (26, 30), pour la mesure des propriétés d'un fluide, dans lequel le résonateur (20, 52) est inséré dans l'unité de support de base (26, 30) et est mis en contact dans celle-ci, dans lequel la zone sensible reste accessible au fluide, et le résonateur (20, 52) peut être activé par l'intermédiaire de points de raccordement (24, 40) sur l'unité de support de base (26, 30), dans lequel l'unité de support de base (26, 30) est formée par un ensemble de feuilles, dans lequel l'unité de support de base (26, 30) comporte une feuille d'appui (14, 34), dans lequel le résonateur (20, 52) ne repose sur la feuille d'appui (14, 34) que dans sa zone marginale, dans lequel le résonateur (20, 52) est relié à une feuille d'obturation (18, 54), au moyen de laquelle le résonateur (20, 52) est fixé dans l'unité de support de base (30), dans lequel l'unité de support de base comporte une feuille de fond (12), qui obture le résonateur (30) reçu au niveau de la face inférieure, par le fait qu'elle est collée sur la feuille d'appui (14, 34), et en ce qu'une feuille d'espacement (16) se situe entre la feuille d'appui (14, 34) et la feuille d'obturation (18, 54), feuille d'espacement dont l'épaisseur est dimensionnée de telle sorte que la feuille d'obturation (18, 54) collée à celle-ci exerce la pression la plus faible possible sur le résonateur (30), de sorte que celui-ci peut vibrer en grande partie sans être amorti, **caractérisé en ce que** le résonateur (20, 52) est mis en contact par l'intermédiaire de bandes conductrices (27, 42) qui sont appliquées sur la feuille d'appui (14, 34), par le fait que ledit résonateur est pressé contre les bandes conductrices (27, 42), et la feuille d'obturation (18, 54) présente en outre sur toute l'épaisseur de la feuille d'obturation (18, 54) un évidement dont le diamètre est légèrement inférieur au diamètre du résonateur (20, 52), de sorte que la feuille d'obturation (18, 54) ne repose que dans la zone marginale du résonateur (20, 52).

2. Dispositif de mesure selon l'une quelconque des revendications précédentes, **caractérisé en ce qu'**une feuille d'espacement (16, 36) est prévue, qui présente un évidement dans lequel le résonateur (20, 52) peut être inséré, et dont l'épaisseur correspond à l'épaisseur du résonateur (20, 52).

3. Dispositif de mesure selon l'une quelconque des revendications précédentes, **caractérisé en ce que** le résonateur (20, 52) est mis en contact par l'intermédiaire de bandes conductrices (27, 42) qui sont appliqués sur la feuille d'appui (14, 34), et les bandes conductrices (27, 42) s'étendent entre la feuille d'appui (14, 34) et la feuille d'espacement (16, 36).
